# EUROPEAN PATENT APPLICATION

(11) **EP 3 168 084 A1**
(43) Date of publication of application: **17.05.2017**
(21) Application number: 16188252.7
(22) Date of filing: 12.09.2016
(51) Int. Cl.: B60R 11/04, G03B 17/00, G03B 17/55, B60R 11/00

(54) **ON-VEHICLE IMAGING DEVICE**

(30) Priority: 11.11.2015 JP 2015221411
(71) Applicant: Toyota Jidosha Kabushiki Kaisha, Toyota-shi, Aichi 471-8571 (JP)
(72) Inventor: ODA, Yuji, Toyota-shi, Aichi 471-8571 (JP)
(74) Representative: TBK

(57) **Abstract**

An imaging element that captures image data of objects outside the vehicle through a front window of the vehicle. A housing accommodates a circuit substrate on which electronic components for processing the image data captured by the imaging element are mounted. A top plate of the housing located above the circuit substrate is formed with vent holes for releasing heat generated in the housing in a direction toward a window area included in an imaging range of the imaging element.

## Description

### BACKGROUND OF THE INVENTION

### 1. Field of the Invention

The present invention relates to an on-vehicle (vehicle-mounted) imaging device installed in a vehicle and adapted to capture image data of objects outside the vehicle through a glass window.

### 2. Description of the Related Art

On-vehicle systems in which a camera is installed in a vehicle interior to take an image of objects outside the vehicle through a glass window are known to date (see patent document 1). Patent document 1 discloses a technology of embedding a hot wire heater around a window area corresponding to the imaging range of the camera and removing the ice frost attached to the window area by heating the window area using the hot wire heater. Patent document 1 also discloses a technology of preventing or removing the fog on the window by lowering the humidity in the neighborhood of the window by using the dehumidification function of the on-vehicle air conditioner.
[patent document 1] JP 2014 101004 A

A driving assistance system mounted to a vehicle assists driving by, for example, detecting a pedestrian or another vehicle around the vehicle by referring to an image captured by an on-vehicle camera through the window and outputting an alert to the driver. If a window area included in an imaging range of the on-vehicle camera is fogged, the on-vehicle camera cannot take an image of objects outside the vehicle properly. This forces the driving assistance system to stop the driving assistance process based on captured images. It is therefore suitable to prevent or remove the fog on the window so that the on-vehicle camera can take an image of objects outside the vehicle properly.

The fog on the window is created when a temperature difference between the inside and the outside of the vehicle is large and when the humidity in the vehicle is high, and when the air temperature in the neighborhood of the window is lowered so that the moisture contained in the air in the neighborhood of the window is released to the window surface. Therefore, the fog is likely to be created when the outside temperature is low or in a rainy weather. In order to prevent or remove the fog on the window, one can take some measures including, for example, lowering the humidity in the neighborhood of the window or increasing the air temperature in the neighborhood of the window, as disclosed in patent document 1.

The hot wire heater disclosed in patent document 1 is embedded around the window area included in the imaging range of the camera so that, when the hot wire heater is activated, the air temperature in the neighborhood of the window area is increased and the fog created on the window can be removed. However, provision of a hot wire heater and mounting of circuits and components for supplying electric power are not favorable in terms of the manufacturing cost. Accordingly, development of a technology for raising the temperature in the neighborhood of the window area included in the imaging range of the camera easily is called for.

### SUMMARY OF THE INVENTION

The present invention addresses this background and the problem to be solved by the present invention is to provide a technology for preventing deterioration of the performance of the on-vehicle imaging device.

The problem is solved by the on-vehicle imaging device having the features of claim 1. Further advantageous developments of the invention are set out in the dependent claims.

The on-vehicle imaging device according to the present invention installed in a vehicle comprises: an imaging element configured to capture image data of objects outside the vehicle through a window of the vehicle; a circuit substrate on which electronic components for processing the image data captured by the imaging element are mounted; and a housing configured to accommodate the circuit substrate. In the on-vehicle imaging device according to the present invention, a top plate of the housing located above the circuit substrate is formed with vent holes for releasing heat generated in the housing in a direction toward a window area which is included in an imaging range of the imaging element.

According to the present invention, it is possible, by forming the vent holes in the top plate of the housing, to release the heat generated by the electronic components mounted on the circuit substrate in a direction from the vent holes toward the window area included in the imaging range of the imaging element so as to heat the air in the neighborhood of the window area. This can prevent or remove the fog or ice on the window area and restrain temperature increase in the electronic components. In other words, waste heat is removed from the electronic components and is used to heat a portion of the window (window area) which is interposed between the imaging element and the outside of the vehicle and through which the light axis of the imaging element passes through.

The on-vehicle imaging device may preferably comprise a hood provided with openings and attached to the top plate of the housing. By attaching the hood on the top plate of the housing, the reflected light from the window is prevented from entering the imaging element. By locating the openings of the hood above the vent holes formed in the top plate of the housing, communication between the inside and the outside of the housing is maintained so that the heat generated in the housing can be released in a direction from the vent holes toward the window area included in the imaging range of the imaging element.

### BRIEF DESCRIPTION OF THE DRAWINGS

Embodiments will now be described, by way of example only, with reference to the accompanying drawings that are meant to be exemplary, not limiting, and wherein like elements are numbered alike in several figures, in which:
Fig. 1 shows a vehicle provided with an on-vehicle imaging device according to an embodiment;
Fig. 2 is a perspective view of the on-vehicle imaging device;
Fig. 3 is a schematic sectional view taken along line B-B of the on-vehicle imaging device shown in Fig. 2;
Fig. 4 shows an exemplary structure of the top plate of the housing;
Fig. 5 is a perspective view of the on-vehicle imaging device in which a hood is attached;
Fig. 6 is a schematic sectional view taken along line C-C of the on-vehicle imaging device shown in Fig. 5; and
Figs. 7A and 7B show variations of the openings formed in the hood.

### DETAILED DESCRIPTION OF THE INVENTION

The invention will now be described by reference to the embodiments. This does not intend to limit the scope of the present invention, but to exemplify the invention.

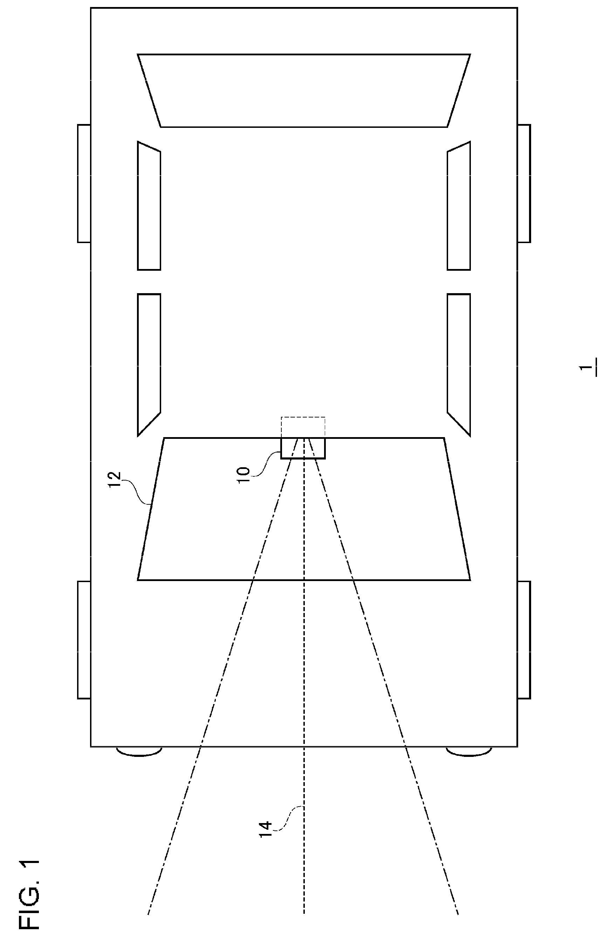

Fig. 1 shows a vehicle 1 provided with an on-vehicle imaging device 10 according to an embodiment. The on-vehicle imaging device 10 is installed in the vehicle and takes an image of objects which are located in front of the vehicle 1 through a front window 12. The on-vehicle imaging device 10 is provided with one or more imaging elements and may be configured as a monocular camera, stereo camera, or infrared camera. The on-vehicle imaging device 10 may be provided with an object detection sensor such as a laser sensor in addition to the imaging element. The on-vehicle imaging device 10 is attached to the front window 12, the rear-view mirror, or the vehicle ceiling such that a light axis 14 of the imaging element faces a space in front of the vehicle.

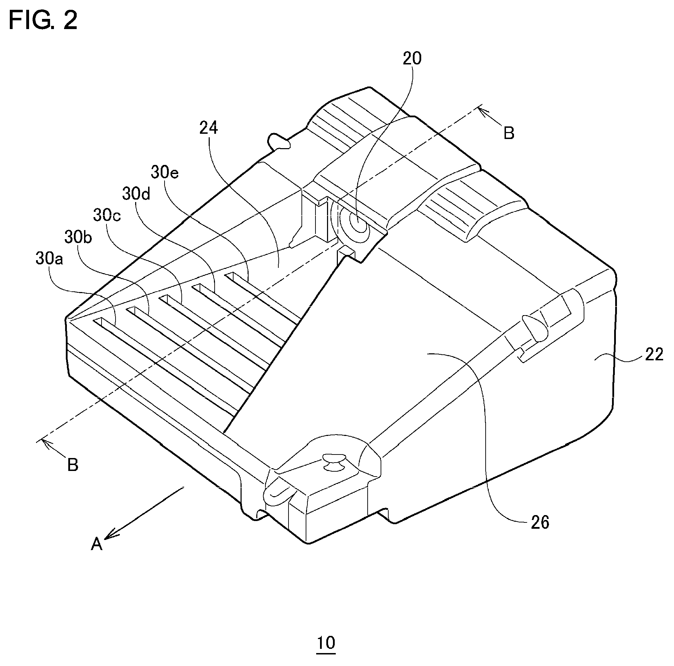

Fig. 2 is a perspective view of the on-vehicle imaging device 10. The on-vehicle imaging device 10 is provided with a housing 22 that houses components. The housing 22 may be made of metal, resin or a suitable synthetic material. A top surface 26 of the housing 22 is inclined downward as a whole toward the front (direction indicated by arrow A). The top surface 26 of the housing 22 is formed by a top plate having a recess 24 that is concave with respect to the surrounding portions. An imaging element 20 is provided at the rear end of the recess 24. The recess 24 has a trapezoidal shape having a breadth that grows larger from the rear end at which the imaging element 20 is provided toward the front. A hood may be attached to the recess 24 to prevent the light from below the on-vehicle imaging device 10 from being reflected by the front window 12 and entering the imaging element 20, as described later. The imaging element 20 takes images of objects outside the vehicle periodically through the window of the vehicle 1 and captures image data accordingly.

The housing 22 accommodates a circuit substrate on which electronic components for processing the image data captured by the imaging element 20 are mounted. The circuit substrate is provided below the recess 24 in the housing 22. The top plate forming the recess 24 is formed with vent holes 30a-30e (hereinafter, referred to as "vent holes 30" where no distinction is made) for releasing heat generated in the housing 22 in a direction toward a window area which is included in the imaging range of the imaging element 20. That is, the heat generated in the housing 22 is released in a direction from the vent holes 30 toward the window area.

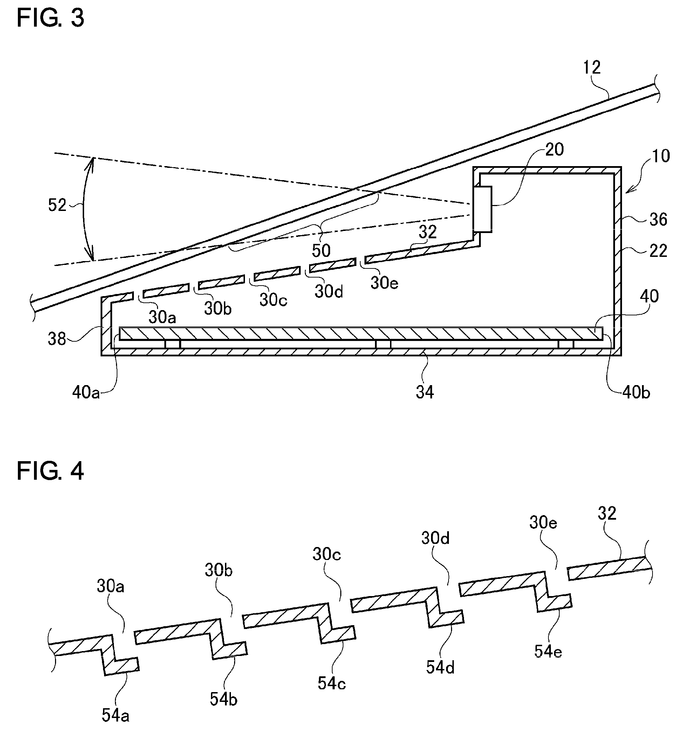

Fig. 3 is a schematic sectional view taken along line B-B of the on-vehicle imaging device 10 shown in Fig. 2. The housing 22 accommodates the circuit substrate 40 inside. The housing 22 comprises a bottom plate 34 provided below the circuit substrate 40 to support the circuit substrate 40, a top plate 32 provided above the circuit substrate 40 to cover the circuit substrate 40, a front plate 38 provided in front of the circuit substrate 40, and a rear plate 36 provided behind the circuit substrate 40. The circuit substrate 40 carries electronic components for processing the image data captured by the imaging element 20. In Fig. 3, lines that connect the imaging element 20 and the circuit substrate 40, and lines that supply electric power to the imaging element 20 and the circuit substrate 40 are omitted from the illustration.

The electronic components mounted on the circuit substrate 40 include a processor for processing the image data and a memory. In the embodiment, the image data captured by the imaging element 20 is used in the driving assistance process by the driving assistance system. While the vehicle 1 is traveling, electric power is continuously supplied to the imaging element 20 and electronic components on the circuit substrate 40 so as to drive the imaging element 20 and the electronic components. For this reason, heat is generated from the imaging element 20 and the electronic components inside the housing 22.

In the on-vehicle imaging device 10 according to the embodiment, the top plate 32 of the housing 22 located above the circuit substrate 40 is formed with a plurality of vent holes 30 for releasing the heat generated in the housing 22, in a direction toward a window area included in an imaging range 52 of the imaging element 20. The window area included in the imaging range 52 is located above the vent holes 30. The vent holes 30 release the heat generated in the housing 22 in a direction in which the window area is located, i.e., upward. In this example, the vent holes 30 are formed as slits produced by cutting the top plate 32 in a breadth direction and establishes communication between the inside and the outside of the housing 22. This causes the heat generated in the housing 22 to be released from the vent holes 30. The released heat from the vent holes 30 warms the air in the neighborhood of the front window 12 located in front of the imaging element 20 so as to prevent or remove the fog or ice coating on the front window 12. By releasing the heat from the vent holes 30 and restraining an increase in the temperature of the imaging element 20 and the electronic components, deterioration of the performance of the imaging element 20 and the electronic components can be prevented. Thus, the simple structure of the on-vehicle imaging device 10, which is the top plate 32 formed with the vent holes 30, is capable of preventing or removing the fog or ice on the front window 12.

In the example shown in Fig. 3, the imaging range 52 represents a vertical viewing angle of the imaging element 20. An imaging area 50 indicates a window area on the front window 12 included in the imaging range 52 of the imaging element 20, i.e., an area on the front window 12 imaged by the imaging element 20. However, the imaging range could also be a solid angle (not shown) so that the imaging area would be substantially a trapezoidal area (not shown). As described above, the vent holes 30 are formed to heat the air in the neighborhood of the imaging area 50 and prevent or remove the fog in the imaging area 50. Hot air has a low specific gravity and moves upward. It is therefore suitable to locate at least some of the vent holes 30 below the imaging area 50 when the on-vehicle imaging device 10 is attached to the vehicle 1 so that the heat released from the vent holes 30 moves in the direction toward the imaging area 50 so as to heat the air in the neighborhood of the imaging area 50 efficiently. There is a slight gap between the top surface 26 of the on-vehicle imaging device 10 and the front window 12 when the on-vehicle imaging device 10 is attached to the vehicle 1, but they are arranged close to each other. For this reason, the top surface 26 and the front window 12 define a substantially sealed space between the imaging element 20 and the front window 12. Since the space between the imaging element 20 and the front window 12 is substantially sealed, the heat released from the vent holes 30 located above the imaging area 50 contributes equally sufficiently to an increase in the temperature of the air in the neighborhood of the imaging area 50.

The circuit substrate 40 may be designed such that electronic components generating a relatively larger amount of heat are mounted more toward a front end 40a than a rear end 40b to take advantage of the upward movement of hot air. By mounting electronic components generating a relatively larger amount of heat at substrate positions below the vent holes 30a and 30b, the generated heat from the components is released through the vent holes 30a and 30b toward the imaging area 50 included in the imaging range 52 of the imaging element 20. The part of the circuit substrate 40 comprising the electronic components generating a relatively larger amount of heat can be regarded as a hot portion of the circuit substrate 40. The released heat travels upward in the space between the imaging element 20 and the front window 12 and thus can efficiently heat the air in the neighborhood of the imaging area 50 so as to prevent or remove the fog in the imaging area 50.

A fan (not shown) for generating an air flow that travels from the rear end side toward the front end side may be provided in the housing 22 in order to release the heat generated in the housing 22 efficiently from the vent holes 30. This can utilize the heat generated in the housing 22 efficiently to prevent or remove the fog on the window and restrain an increase in the temperature of the imaging element 20 and the electronic components.

Fig. 4 shows an exemplary structure of the top plate 32 of the housing 22. Traps 54a-54e (hereinafter, referred to as "traps 54" where no distinction is made) for trapping the dust or dirt are formed in the vent holes 30a-30e of the top plate 32, respectively. The trap 54 is comprised of a hanging part that hangs from the front edge of the vent hole 30 produced by cutting the top plate 32 in a breadth direction and an extension part that extends backward from the lower end of the hanging part. The extension parts are oriented upward instead of being horizontal when the on-vehicle imaging device 10 is attached to the vehicle 1. Accordingly, the dust and dirt are trapped by the extension parts and are prevented from being deposited on the circuit substrate 40. Naturally, the traps can also be provided by protruding to the outside of the housing (upwards) and/or being opposingly oriented with respect to the direction indicated by arrow A (in Fig. 2).

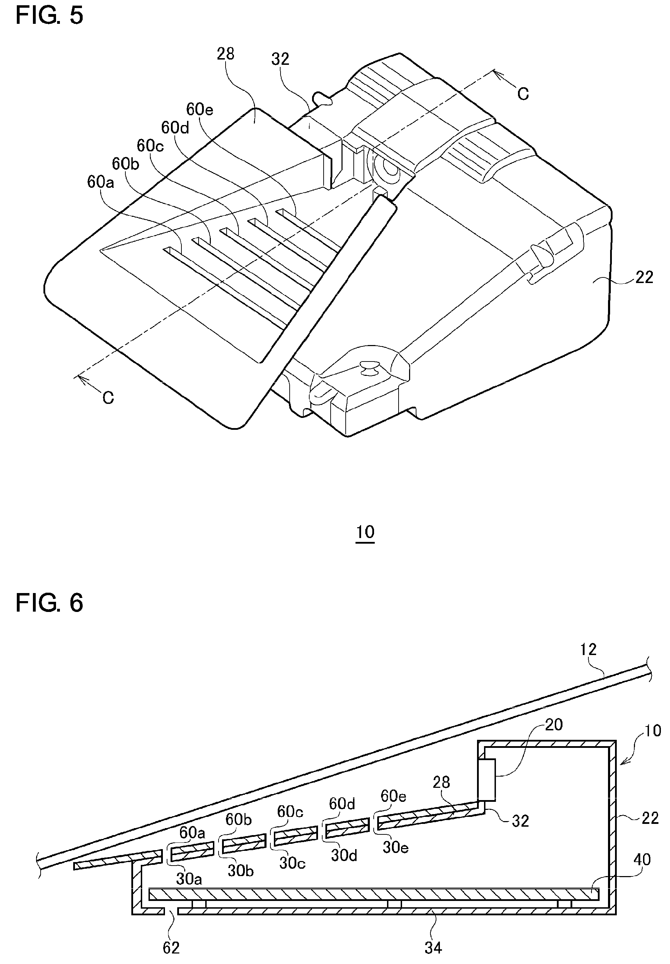

Fig. 5 is a perspective view of the on-vehicle imaging device 10 in which a hood 28 is attached to the top plate 32 of the housing 22. The hood 28 may be made of metal, resin or a suitable synthetic material. The hood 28 is secured in close contact with the recess 24 (see Fig. 2) and prevents the light from below the on-vehicle imaging device 10 from being reflected by the front window 12 and entering the imaging element 20. The hood 28 has a shape that overhangs the recess 24 in order to block the reflected light from the front window 12 efficiently.

As shown in Fig. 5, the hood 28 has a plurality of openings 60a-60e (hereinafter, referred to as "openings 60" where no distinction is made). The openings 60 are provided in alignment with the respective vent holes 30 of the top plate 32. In this example, the openings 60 are formed as slits cut in a breadth direction to adapt to the shape of the vent holes 30 shown in Fig. 2. The openings 60 of the hood 28 are located above the vent holes 30 formed in the top plate 32 of the housing 22 and maintain a state in which the vent holes 30 establish communication between the inside and the outside of the housing 22. In other words, the hood 28 is attached to the top plate 32 such that the vent holes 30 and the openings 60 are aligned.

Fig. 6 is a schematic sectional view taken along line C-C of the on-vehicle imaging device 10 shown in Fig. 5. The housing 22 accommodates the circuit substrate 40 inside. The difference from the sectional view along B-B of the on-vehicle imaging device 10 shown in Fig. 3 is that the hood 28 is attached to the top plate 32 in Fig. 6.

As shown in Fig. 6, the openings 60 of the hood 28 are located above the vent holes 30 of the top plate 32. This maintains communication between the inside and the outside of the housing 22. The openings 60 are formed to adapt to the positions and shapes of the vent holes 30 in the top plate 32. The front-back width of the openings 60 may be slightly larger than the front-back width of the vent holes 30 to ensure that the vent holes 30 are not blocked due to an error in the position of attachment of the hood 28 to the top plate 32.

Referring to the sectional view shown in Fig. 6, a communication port 62 for establishing communication between the spaces inside and outside the housing 22 is formed in the bottom plate 34 of the housing 22 and preferably located below the circuit substrate 40. In the vehicle 1, an air conditioner generates an air flow that travels upward along the front window 12. The communication port 62 receives the air flow from the air conditioner and promotes heat dissipation from the vent holes 30 and the openings 60. By providing the communication port 62 in this way, the air flow induced by the air conditioner is utilized to release the heat generated in the housing 22 efficiently in the direction toward the imaging area 50. Since hot air moves upward, the amount of heat released from the communication port 62 located below the vent holes 30 and the openings 60 is relatively small. The communication port 62 contributes to prevention or removal of the fog on the front window 12 by generating a stack effect in the housing together with the vent holes 30 and the openings 60. Naturally, the communication port 62 can also be used in the structure shown in Fig. 3, i.e. without the hood 28.

Figs. 5 and 6 show that the hood 28 is attached to the top plate 32. Alternatively, the top plate 32 and the hood 28 may be formed to be integral with each other using the same material. In other words, the top plate 32 may be formed to have the shape of the hood 28. In this case, the number of components can be reduced.

The hood 28 may or may not be attached to the on-vehicle imaging device 10 according to the embodiment, as shown in Figs. 2 and 5. In the absence of the hood 28, the vent holes 30 are exposed. In the presence of the hood 28, the openings 60 are exposed. The vent holes 30 or the openings 60 as exposed provide the advantage of scattering outside light such as sunlight and streetlights and reducing the light entering the imaging element 20. Additionally, the hood 28 may be provided with traps protruding outside to prevent dust and dirt from entering the inside of the housing 22.

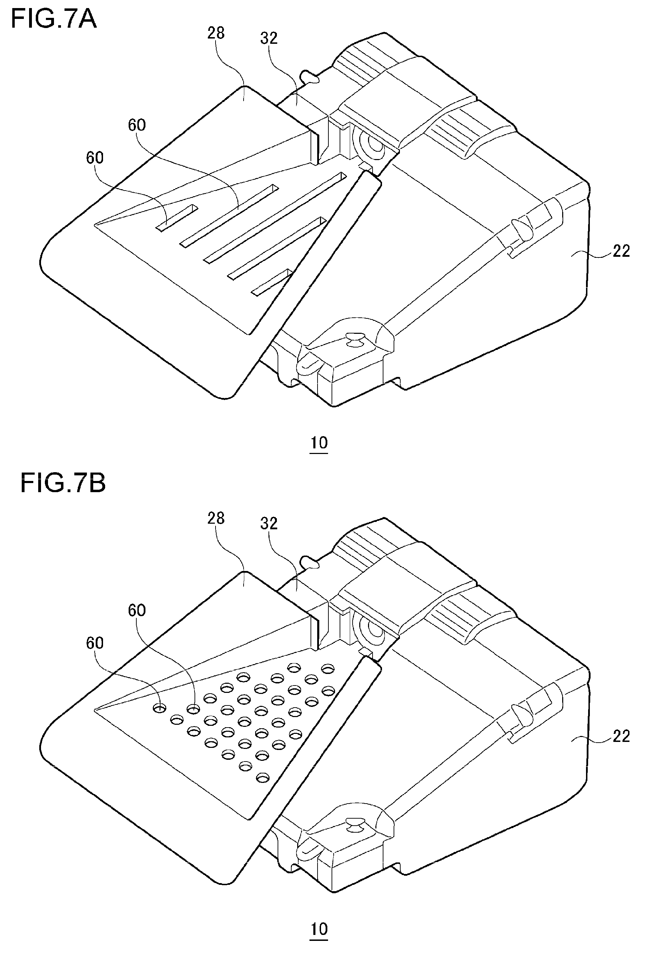

Figs. 7A and 7B show variations of the openings 60 formed in the hood 28. The openings 60 shown in Fig. 7A are formed as slits which are cut in a front-end direction, and the openings 60 shown in Fig. 7B are formed as circular through holes. The top plate 32 located below the hood 28 is formed with vent holes 30 of the same shape. By aligning the vent holes 30 and the openings 60, communication is established between the inside and the outside of the housing 22.

Given above is an explanation based on exemplary embodiments. The embodiments are intended to be illustrative only and it will be obvious to those skilled in the art that various modifications to constituting elements could be developed within the scope of the appended claims. Particularly, features described in connection with any embodiment may be also used together with other embodiments, as long as this combination is technically feasible.

By way of example, the on-vehicle imaging device 10 according to the embodiment is attached to the vehicle 1 so as to take images of objects which are located in front of the vehicle. Alternatively, the on-vehicle imaging device 10 may be attached to the vehicle 1 so as to take images of objects which are located in other directions (e.g., objects behind or lateral to the vehicle). By way of example, the vent holes 30 and the openings 60 are formed as slits having a rectangular cross section. Alternatively, slits of other shapes may be formed.

## Claims

1. An on-vehicle imaging device (10) installed in a vehicle (1), comprising:
an imaging element (20) configured to capture image data of objects outside the vehicle through a window (12) of the vehicle;
a circuit substrate (40) on which electronic components for processing the image data captured by the imaging element are mounted; and
a housing (22) configured to accommodate the circuit substrate, wherein
a top plate (32) of the housing located above the circuit substrate is formed with vent holes (30) for releasing heat generated in the housing in a direction toward a window area (50) which is included in an imaging range (52) of the imaging element.

2. The on-vehicle imaging device (10) according to claim 1, further comprising:
a hood (28) provided with openings (60) and attached to the top plate (32) of the housing, wherein
the openings of the hood and the vent holes formed in the top plate of the housing are aligned.

3. The on-vehicle imaging device (10) according to claim 2, wherein the top plate (32) and the hood (28) are formed integrally.

4. The on-vehicle imaging device (10) according to any of the preceding claims, wherein the circuit substrate (40) is mounted with a hot portion toward a front of the vehicle (1).

5. The on-vehicle imaging device (10) according to any of the preceding claims, wherein the housing (22) comprises a bottom plate (34) having a communication port (64).

6. The on-vehicle imaging device (10) according to claim 5, wherein the communication port (64) is provided at the front of the vehicle (1)

7. The on-vehicle imaging device (10) according to claims 5 or 6, wherein the communication port (64) is provided below a hot portion of the circuit substrate (40).

8. The on-vehicle imaging device (10) according to any of the preceding claims, wherein a fan is provided in the housing (22).

9. The on-vehicle imaging device (10) according to any of the preceding claims, wherein the housing (22) and/or the hood (28) are provided with traps.

10. The on-vehicle imaging device (10) according to any of the preceding claims, wherein the on-vehicle imaging device (10) is provided with more than one imaging element (20).

11. The on-vehicle imaging device (10) according to any of the preceding claims, wherein the on-vehicle imaging device (10) is a monocular camera, a stereo camera, or a infrared camera.

12. The on-vehicle imaging device (10) according to any of the preceding claims, wherein the on-vehicle imaging device (10) is provided with an object detection sensor in addition to the at least one imaging element (20).

13. The on-vehicle imaging device (10) according to claim 12, wherein the object detection sensor is a laser sensor.

14. The on-vehicle imaging device (10) according to any of the preceding claims, wherein the on-vehicle imaging device (10) is attached to the front window (12), a rear-view mirror, or a vehicle ceiling such that a light axis (14) if the imaging element (20) faces a space in front of the vehicle.
